# EUROPÄISCHE PATENTSCHRIFT

(11) **EP 1 047 926 B1**
(45) Veröffentlichungstag und Bekanntmachung des Hinweises auf die Patenterteilung: **06.08.2003**
(21) Anmeldenummer: 99904876.2
(22) Anmeldetag: 10.02.1999
(51) Int. Cl.: G01M 3/16, G01M 3/18

(54) **Detektion und Ortung von Undichtigkeiten in Räumen, Behältern, Rohrleitungssystemen mit einem Laufzeitbildarchiv**
Detecting and locating leakage in rooms, containers, pipe networks with records of propagation time images
Localisation des points de fuite dans des locaux, des containers, des systèmes de conduites avec des archives d'images de temps de propagation

(30) Priorität: 10.02.1998 DE 19805263
(43) Veröffentlichungstag der Anmeldung: 02.11.2000
(73) Patentinhaber: Brandes GmbH, 23701 Eutin (DE)
(72) Erfinder: KAMKALOW, Fritz, S., D-23701 Eutin (DE)
(74) Vertreter: Einsel, Martin, Dipl.-Phys.
(86) Internationale Anmeldenummer: EP9900868
(87) Internationale Veröffentlichungsnummer: WO99041580

(56) Entgegenhaltungen:
- EP-A- 0 298 479
- DE-A- 3 930 530
- DE-A- 19 519 650

## Beschreibung

Die Erfindung betrifft ein Verfahren zur Detektion und Ortung von Undichtigkeiten in Räumen, Behältern und/oder Rohrleitungssystemen, die Innenrohr, Außenrohr und einen mit Luft, Gas oder Füllmaterial zur Wärmedämmung gefüllten Isolierraum zwischen dem Innenrohr und der Innenwandung des das Innenrohr mit Abstand umgebenden Außenrohres sowie Sensorleitungen im Isolierraum aufweisen. Solche Rohrleitungssysteme werden insbesondere für die Übertragung von Fernwärme genutzt. Undichtigkeiten solcher Leitungen können an Sprungstellen des Wellenwiderstandes der Sensorleitung oder Durchfeuchtung des Isolierraumes der Leitung erkannt werden.

Es ist bekannt, zur Detektion und Ortung von Undichtigkeiten in die Sensorleitung Impulse zu senden und aus der Laufzeit und der Größe der an Sprungstellen, Undichtigkeiten, Feuchtestellen oder dergleichen reflektierten oder teilreflektierten und wieder empfangenen Impulse die Lage von ein oder mehreren Sprungstellen zu ermitteln und in einer Laufzeitkurve darzustellen (US 5 134 377), wobei die empfangenen reflektierten Impulse mit einer vorbestimmten, konstanten Größe verglichen werden und bei Überschreiten des vorbestimmten oder vorbestimmbaren Abstandes dieser Größe von der Laufzeitkurve auf Undichtigkeit des entsprechenden Ortes zu schließen. Es ist auch bekannt (EP 0 298 479 A2), aus den empfangenen reflektierten Impulsen Proben (samples) zu entnehmen, jede Probe um einen anderen Betrag zeitlich zu verschieben, zu speichern und die Proben mit für dasselbe Rohrleitungssystem zuvor aufgezeichneten Proben (samples) zu vergleichen, um bei Überschreiten einer vorbestimmten Größe des Unterschiedes beider demselben Ort entsprechenden Proben die der jeweiligen Probe entsprechende Sprungstelle als Undichtigkeit zu definieren. Weil dort angenommen wird, dass die Kurven der so verglichenen Proben ohne Fehlermeldung gleichen Verlauf haben sollen, könnte in einem solchen Fall der Abstand der Proben von den entsprechenden Werten der einen gespeicherten Referenzkurve geringer bemessen werden als bei dem Vergleich der Kurve mit einer konstanten Größe. Es hat sich gezeigt, dass Fehler, Undichtigkeiten oder dergleichen mit den bekannten Verfahren nicht immer mit Sicherheit erkannt werden können. Der Abstand der zu vergleichenden Kurven muss daher immer noch recht groß bemessen werden, um Fehlalarme zu vermeiden .

Der Erfindung liegt die Aufgabe zugrunde, ein neues Verfahren und eine neue Einrichtung zur verbesserten Detektion und Ortung von Fehlern, Undichtigkeiten oder dergleichen nach dem Laufzeitverfahren zu schaffen, die ohne konstante Vergleichsgrößen auskommen und geringere Abstände der Meßwerte von den Referenzkurven zulassen.

Diese Aufgabe wird durch das im Anspruch 1 definierte Verfahren gelöst. Eine Einrichtung zur Durchführung des Verfahrens ist im Anspruch 6 definiert. Weiterbildungen von Verfahren und Einrichtung sind in den abhängigen Ansprüchen gekennzeichnet.

Der Erfindung liegt die Erkenntnis zugrunde, dass sich die elektrischen Eigenschaften der Sensorleitung und damit die Laufzeit und das Reflexionsverhalten der eingespeisten Impulse in Abhängigkeit von den Umgebungsbedingungen wie Temperatur oder Druck ändem, so dass von der beim Stand der Technik angenommenen Ähnlichkeit der Werte und des Gradienten von zeitlich nacheinander aufgenommenen Proben nur bedingt die Rede sein kann, weil langsame Einflüsse aus Betriebsparametern und Alterung untrennbar vermischt sind.

Es ist zwar bei Fernwärmeleitungen schon bekannt (DE-A1-1 959 650), Temperatursensoren einzusetzen, um für bestimmte Schalterkonzepte mit künstlich vorgetäuschten Undichtestellen Korrekturwerte für diese Stellen zu gewinnen, doch sind Verfahren zur Prüfung der Richtigkeit eines Alarms aufgrund des einen Abstand zweier zu vergleichender Kurven überschreitenden Impulses und Verfahren zur Eichung der Meßwerte eines zu prüfenden Ortes durch Vergleich mit einem tatsächlich vorgegebenen Ort nicht vergleichbar.

Die Erfindung besteht im Prinzip in einem Verfahren zur Detektion und Ortung von Undichtigkeiten in Räumen, Behältern und Rohrleitungssystemen, denen ein oder mehrere isolierte oder isoliert angeordnete Sensorleitungen zugeordnet sind, bei dem in die Sensorleitung Impulse gesendet werden und aus der Laufzeit und der Größe der an Sprungstellen, Undichtigkeiten oder dergleichen reflektierten oder teilreflektierten und wieder empfangenen Impulse die Lage von ein oder mehreren Sprungstellen ermittelt und die oder diese Lagen in einem als Bezugskurve für spätere Messungen dienenden Laufzeitdiagramm dargestellt werden und bei dem bei späteren Messungen erneut Impulse in die Sensorleitung gesendet werden und die aufgrund Reflexion und Teilreflexion empfangenen Impulse bei Überschreitung oder Unterschreitung von der Bezugskurve zugeordneten, vorbestimmten Schwellwerten als Anzeige für Undichtigkeiten genutzt werden, wobei der auf einen gesendeten Impuls folgende zeitliche Ablauf der wieder empfangenen reflektierten oder teilreflektierten Impulse für dieselbe Sensorleitung als Laufzeitbild für mehrere Parametern (Temperatur 20°C, 80°C, 100°C, Druck, Feuchte, Luftfeuchte etc.) festgestellt und gespeichert und/oder dargestellt wird, bis ein Laufzeitbildarchiv vieler möglicher Parameter oder Betriebszustände derselben Sensorleitung vorliegt, und wobei bei späteren Messungen bei Überschreiten einer vorbestimmten oder vorbestimmbaren Größe des empfangenen reflektierten Impulses relativ zu einer für dieselbe Sensorleitung (5) zuvor erstellten, um die vorbestimmte Größe versetzt dargestellten Referenzdarstellung die entsprechende Überschreitungsstellestelle als Undichtigkeit definiert wird.

Die einem Vergleich mit aktuellen Laufzeitkurven zugrundegelegten früheren Kurven werden im folgenden Statuskurven genannt.

Die Unterschiede der Statuskurve eines Parameters zu Statuskurven anderer Parameter bestehen im wesentlichen darin, dass die unterschiedlichen Parameter den Wellenwiderstand der Sensorleitung beeinflussen und dadurch die Laufzeit der Impulse und die Form und Amplitude von Reflexionen und/oder Teilreflexionen verändern können. Die Gemeinsamkeit unterschiedlicher Werte gleichen Parameters in der Statuskurve ist die Wiederholung, wenn das Prüfobjekt den früheren Wert wieder einmal annimmt. Eine bei gleichen Parameterwerten abweichende Kurve ist Hinweis auf einen Fehler am Ort der Abweichung. Synchron zu Wertänderungen der Parameter verlaufende Änderungen der Kurven sind so als irrelevant erkennbar. Da auch die Alterung der Werkstoffe ein Parameter sein kann, läßt sich diese durch Abgleich der Änderungen im Gesamtsystem so berücksichtigen.

Bei einer Einrichtung gemäß der Erfindung zur Durchführung des Verfahrens sind dem oder den Systemen aus Räumen, Behältern und/ oder Rohrleitungen Meßeinrichtungen oder Sensoren für die Messung der verschiedenen Parameter, also von Temperaturen und/oder Drucken und/oder Feuchte und/oder Luftfeuchte und/oder anderen sonstiger physikalischer Parameter zugeordnet. Die Parameter werden vorzugsweise mehrfach in unterschiedlichen Bereichen des Systems von Räumen, Behältern und/oder Rohrleitungen gemessen. Die Meßergebnisse können am Ort des jeweiligen Sensors gespeichert werden und bei Bedarf von der Überwachungsstelle abgerufen werden. Es ist aber auch möglich, diese Meßwerte kontinuierlich oder in Zeitabständen an die Überwachungsstelle zu senden. Für die Übertragung der Meßwerte der verteilt angeordneten Sensoren zur Überwachungsstelle sind vorzugsweise drahtlose und/oder drahtgebundene Sender vorgesehen. In der Überwachungsstelle werden die Statuskurven und die Scharen später ermittelter Laufzeitbilder in einem Rechner gespeichert und die später ermittelten Laufzeitbilder ganz oder für einzelne Teilabschnitte automatisch mit den Statuskurven zugehöriger Parameter verglichen. Eine Betrachtung nur von Teilbereichen kann nützlich sein, weil die Parameter über das Rohrleitungssystem unterschiedliche Werte haben können. Das soweit beschriebene Verfahren oder Meßsystem kann als parameterkompensiert definiert werden.

Zur näheren Erläuterung der Erfindung werden im folgenden mehrere Ausführungsbeispiele anhand der Zeichnungen beispielsweise beschrieben. Diese zeigen in
- Fig. 1: den Querschnitt einer Fernwärmeleitung mit Innenrohr, Außenrohr und Sensorleitungen,
- Fig. 2: eine Prinzipdarstellung einer Fernwärmeleitung mit Außenrohr sowie zwei Sensor- oder Fühler- Leitungen und Sensor,
- Fig. 3: ein Laufzeitbild ohne Berücksichtigung von Parametern, aber mit drei Änderungen der Kurvenform, die auf eine fortschreitende Undichtigkeit hinweisen,
- Fig. 4: ein Laufzeitbild mit drei Laufzeitkurven, von denen die mittlere Kurve die aktuell gemessen Kurve wie in Fig 3 ist und von denen die beiden äußeren Kurven einer Statuskurve entsprechen und nur zur Andeutung eines Toleranzbereiches zu beiden Seiten der aktuellen Kurve eingeblendet sind,
- Fig. 5: ein Laufzeitbild mit einer Statuskurve, die einen Kurvenverlauf für 0° und einen Kurvenverlauf für 100°C zeigt.
- Fig. 6: eine Abwandlung von Fig. 4 mit eingezeichneter Kurve für 100°C.
- Fig. 7: eine Prinzipdarstellung einer Raumüberwachung mit zwei Sensor- oder Fühler-Leitungen und Meßeinrichtungen und/oder Sensoren für die Parameter-Messung.
- Fig. 8: eine Prinzipdarstellung einer Überwachung mehrerer Behälter mit zwei Sensor- oder Fühler Leitungen und Meßeinrichtungen und/oder Sensoren für die Parameter-Messung.

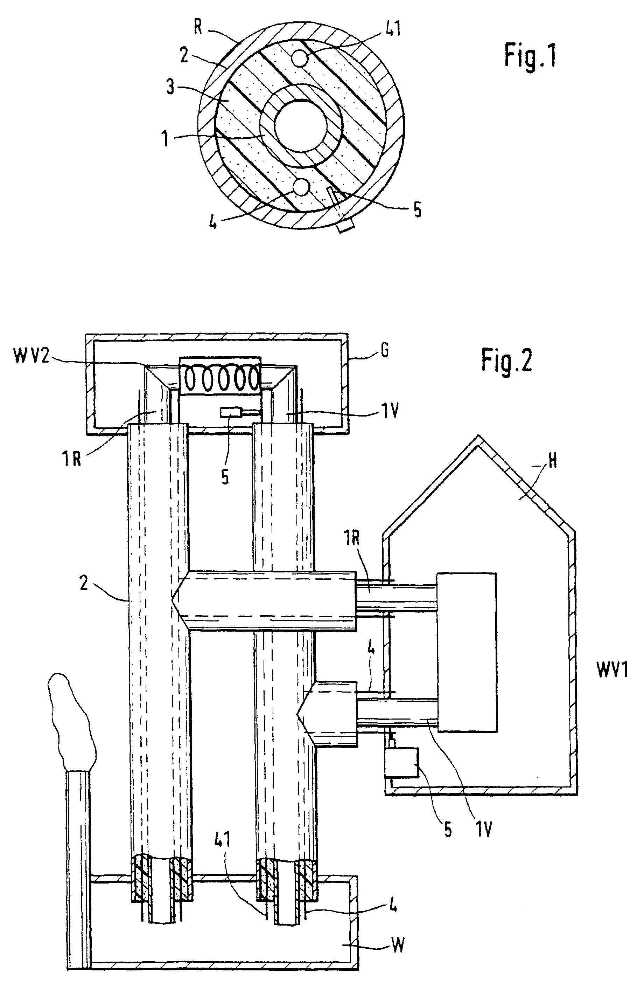

In Fig. 1 ist ein Rohrleitungssystem mit dem Querschnitt einer Fernwärmeleitung R dargestellt, die ein Innenrohr 1, ein Außenrohr 2 und zwei Sensorleitungen 4, 41 enthält. Das Außenrohr 2 kann auch ein nicht dargestelltes, für den Rücklauf bestimmtes weiteres Innenrohr umschließen. Der Zwischenraum zwischen Innenrohr 1 und Außenrohr 2 ist mit einem bei der Einfüllung möglichst trockenen Füllmaterial 3, Z.B. einem Polyurethan (PU), gefüllt. Der Sensor 4 ist im Füllmaterial 3 angeordnet und besteht aus Kupfer oder einem anderen für Sensorleitungen geeigneten leitfähigen Material. Zwischen der Wandung des Innenrohres 1 und dem Sensor 4 sind an vorbestimmten oder vorbestimmbaren Stellen der Leitung R, vorzugsweise an zugänglicher Stelle in Schächten oder Gebäuden, Sensoren 5 angeordnet, die ständig oder bei Empfang eines entsprechenden Befehls beispielsweise die Temperatur in der Isolierung des Rohres messen. Diese Temperatur beeinflußt die Größe des Wellenwiderstandes der Sensorleitungen. Die Messergebnisse sind also wesentlich für die Größe des Wellenwiderstandes der Sensorleitungen 4, 41. Als vorbestimmte Stelle ist z.B. die Mitte der Leitung R zwischen zwei üblichen Meßpunkten einer Trasse vorgesehen, die beispielsweise voneinander eine Entfernung von bis zu 1000 m haben. Die jeweilige Meßeinrichtung oder die Sensoren 5 können ferngesteuert oder automatisch, ggf. zu vorbestimmten Zeiten messen und/oder die Meßergebnisse der Überwachungsstelle mitteilen. Die Sensoren 5 können ihre evtl erforderliche Energie über die Sensorleitung 4, 41 erhalten. Ein Femwärmenetz kann aus vielen solcher Trassen von insgesamt z.b. 100 km Leitungslänge bestehen. Dann kann jede dieser Trassen mit Meßstellen 5 versehen sein, jede Meßstelle ihre Ergebnisse an die Überwachungsstelle senden und zusammen mit der Aufnahme der Laufzeitbilder eine sichere und leichte Überwachung bzw. Ortung von Fehlerstellen ermöglichen.

Fig. 2 zeigt die Prinzipdarstellung eines Femwärmesystems mit Wärmequelle W sowie einer Femwärmeleitung R mit zwei nebeneinander verlaufenden Außenrohren 2V und 2R für Hin- und Rücklauf und den beiden eigentlichen für den Wärmetransport bestimmten Innenrohren 1 V und 1 R sowie den Sensorleitungspaaren 4, 41 und einem Sensor 5, der in einem Haus H mit dem Wärmeverbraucher WV 1 angeordnet ist und im Innenrohr 1 die Temperatur mißt, der die Sensorleitung 4, 41 ausgesetzt ist. Zur besseren Darstellung des Femwärmesystems ist in dieser Figur noch ein Gebäude G mit einem weiteren Wärmeverbraucher WV2 und einem weiteren Sensor 5 dargestellt. In ähnlicher Weise können die Sensoren für Druck oder dergleichen angeordnet und betrieben werden.

Die Meßwerte können über die Sensorleitung 4, 41 oder drahtlos übertragen werden.

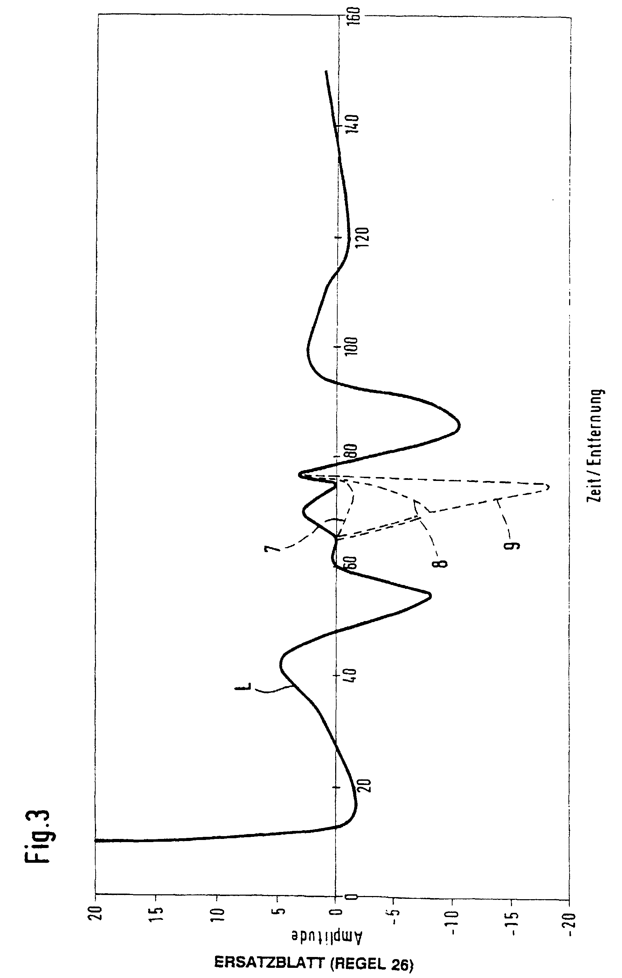

Fig. 3 zeigt ein Laufzeitbild ohne Berücksichtigung von Parametern, aber mit drei Änderungen der Kurvenform, die auf eine fortschreitende Undichtigkeit hinweisen. Wenn die Detektionsschwelle konstant ist, muß sie recht hoch sein, um Fehlmeldungen zu vermeiden. Die hier eingezeichnete Undichte wird erst in Phase 3 delektiert. Der aus dem Sensorkabel und verschiedenen Verbindungskabeln bestehende Überwachungskreis hat nämlich keinen konstanten Wellenwiderstand und liefert daher eine Vielzahl von Teilreflektionen. Keine dieser Teilreflektionen darf aber zu einer Undichtemeldung führen.

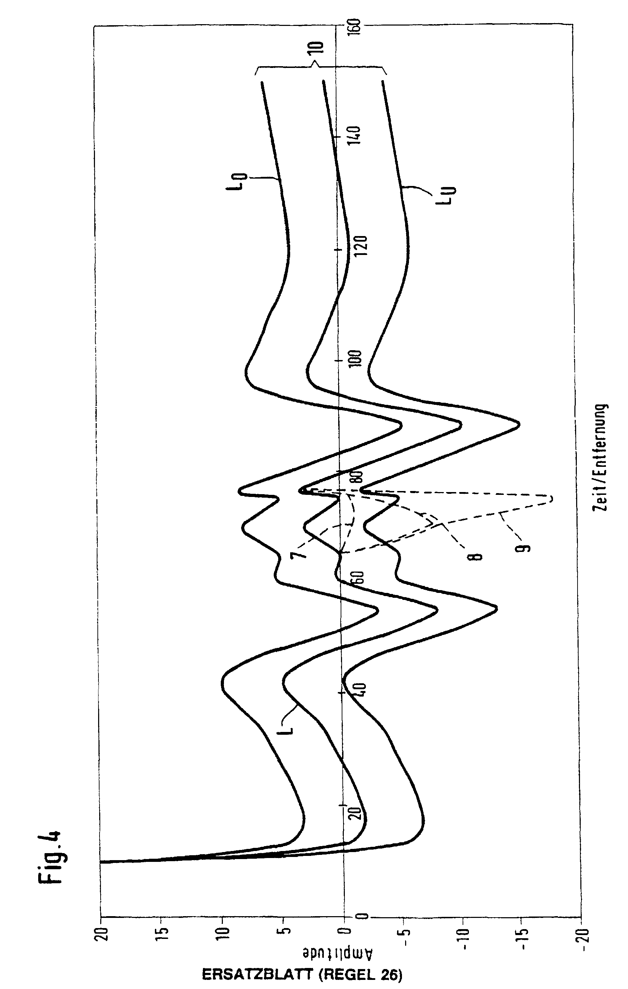

Fig. 4 zeigt ein Laufzeitbild mit drei Laufzeitkurven, von denen die mittlere Kurve die aktuell gemessene Kurve wie in Fig 3 ist und von denen die beiden äußeren Kurven einer Statuskurve entsprechen und zur Andeutung einer verbesserten Detektionsschwelle 10 zu beiden Seiten der aktuellen Kurve eingeblendet sind,. Dieses Laufzeitbild geht von drei praktisch identischen Kurven aus, bei denen eine fortschreitende Undichtigkeit schon in Phase 2 detektiert wird, also bei einer Kurvenform 8. Hier kann die Schwelle 10 kleiner als in Fig. 3 gewählt werden, weil selbst bei lebhaften Änderungen des Kurvenverlaufs die Kurven praktisch ineinandergeschachtelt sind. Der Toleranzbereich muß allerdings so groß gewählt werden, daß Veränderungen an der Sensorik durch andere Umwelteinflüsse wie Temperatur und Druck zu einer Leckagemeldung führen

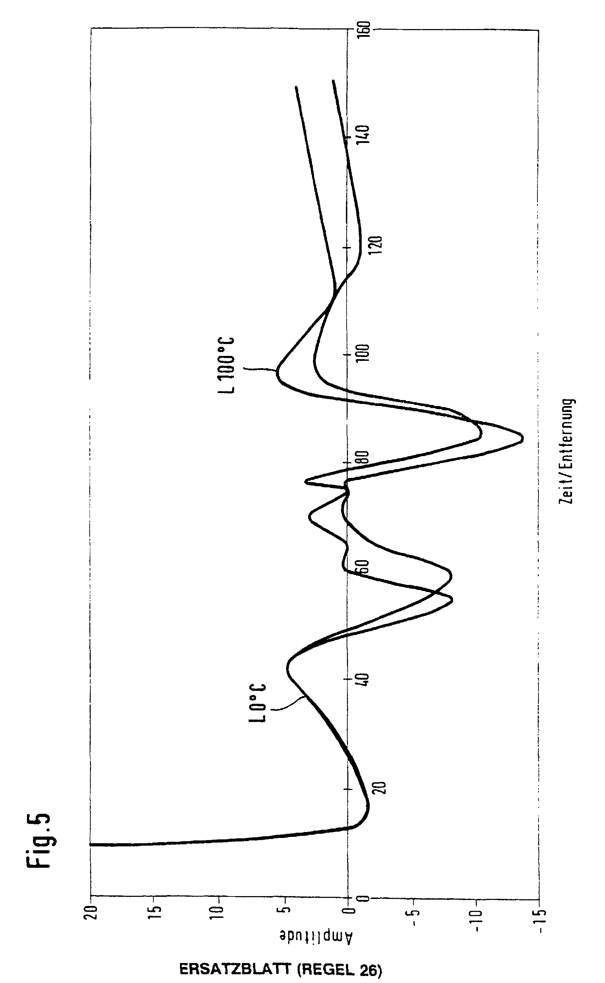

Fig. 5 zeigt ein Laufzeitbild mit einer Statuskurve, die unterschiedliche Laufzeiten der Impulse zeigt für unterschiedliche Temperaturen im Laufweg der Impulse. In der rechten Bildhälfte spaltet sich die Kurve in einen Kurvenverlauf für 0° und einen Kurvenverlauf für 100°C Umgebungstemperatur der Sensorleitung 4 (in Fig. 1 und 2). Auch Änderungen der Druckverhältnisse und allgemeine Feuchteeinflüsse können zur Veränderung der Materialeigenschaften und der Sensorik führen. Auch eine allgemeine Alterung führt zu solchen Ergebnissen.

Das beeinflußt den Wellenwiderstand und führt zu den schon erwähnten Änderungen der Ausbreitungsgeschwindigkeit. Das Laufzeitbild schwankt mit dem Temperaturgang sowohl in der Zeitachse als auch in der Amplitude. Das ist besonders kritisch wenn die Temperaturverteilung nicht gleichmäßig über das Rohrleitungssystem ist oder wenn Abschnitte aus verschiedenen Kabeln zu einem Überwachungskreis zusammengeschaltet sind.

Durch Messung der physikalischen Größen und Archivierung der zugehörigen Laufzeitbilder können die gegenseitigen Abhängigkeiten bestimmt werden. Ein Ergebnis solcher Messungen ist beispielsweise ein Archiv von Statuskurven für die Parameter, die die Laufzeitbilder beeinflussen könnten.

Eine Materialalterung ist ein langsam laufender Vorgang. Solche langsam ablaufenden Vorgänge lassen sich durch kontinuierliches Abgleichen mit sehr großer Zeitkonstante der Statuskurve anhand aktueller Laufzeitkurven korrigieren. Dieser Vorgang ist relativ unkritisch. Eine richtige Leckage dagegen ist ein plötzliches Ereignis, das auch in kürzester Zeit zu einer Benetzung der Sensorleitung führt.

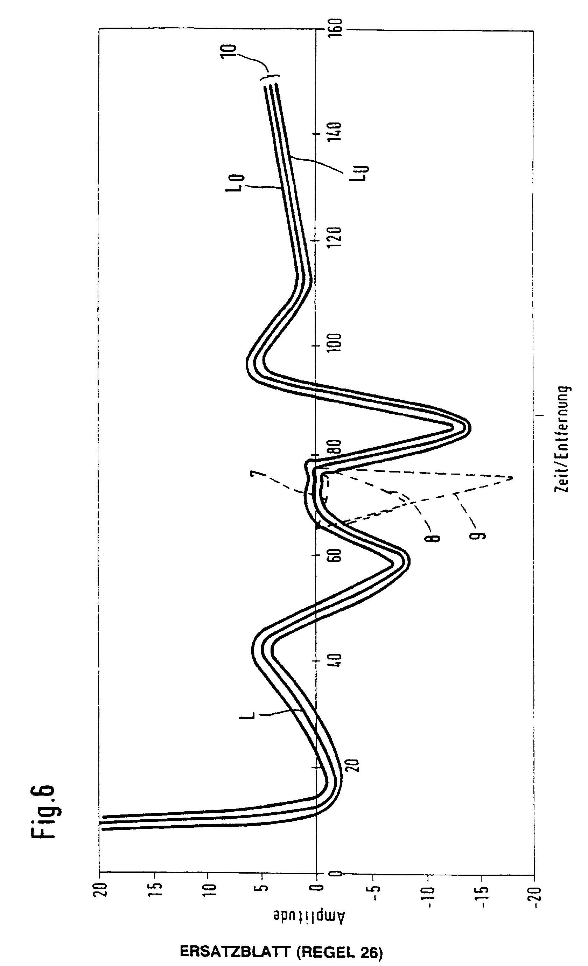

Fig. 6 zeigt eine Abwandlung von Fig. 4 mit eingezeichneten Kurven für 100°C. Der Toleranzbereich kann hier deutlich kleiner gewählt werden als in Fig. 4, da der Einfluß der Temperaturänderung nicht mehr explizit berücksichtigt werden muß. Wie schon diese beiden Kurven zeigen, kann hier mit der 100°C-Kurve das Leck sicherer detektiert werden, nämlich schon in Phase 1, also schon im Anfangsstadium der Undichte.

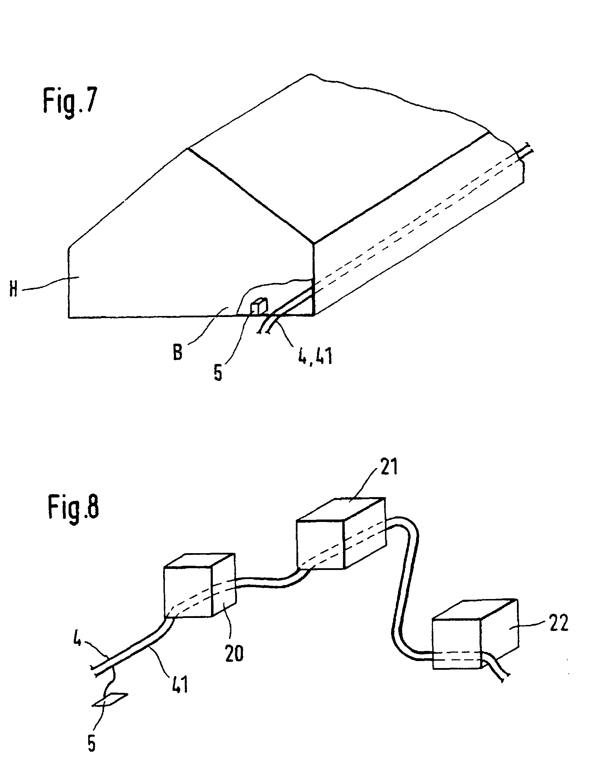

Fig. 7 zeigt einen Raum H mit einer längs seines Bodens B verlegten Sensorleitung 4, 41. Sobald die Sensorleitung 4, 41 naß oder auch nur feucht wird, ändert sich ihr Wellenwiderstand und damit das Laufzeit- und/oder Reflexionsverhalten für und von Impulsen.

Fig. 8 zeigt eine Prinzipdarstellung einer Überwachung mehrerer getrennt voneinander angeordneter Behälter 20, 21, 22, durch die die Sensor- oder Fühlerleitungen 4, 41 hindurchgeführt sind. In Fig. 8 durchdringt die Sensorleitung Räume und Behälter in reihe. Es ist aber auch möglich, Abzweigungen vorzusehen entsprechend Fig. 2. Die verschiedenen Behälter 20, 21, 22 können unterschiedlichen Zwecken dienen und unterschiedlichen Parametern unterliegen. Den Behältern und/oder den Zwischenräumen können daher auch unterschiedliche Meßeinrichtungen 5 und/oder Sensoren für die jeweiligen Parameter zugeordnet werden. Die Laufzeit-Messung kann daher auch leicht die Lage von Fehlerstellen in den verschiedenen Behältern, aber auch in den Zwischenräumen anzeigen oder bestimmen.

## Patentansprüche

1. Verfahren zur Detektion und Ortung von Undichtigkeiten in Räumen, Behältern und/oder Rohrleitungssystemen, denen mindestens eine isolierte oder isoliert angeordnete Sensorleitung (4) zugeordnet ist, bei dem der auf einen gesendeten Impuls folgende zeitliche Ablauf der wieder empfangenen reflektierten oder teilreflektierten Impulse für dieselbe Sensorleitung (4) als Laufzeitbilder für mehrere Parameter festgestellt und gespeichert und/oder dargestellt werden, bis ein Laufzeitbildarchiv vieler möglicher Parameter derselben Sensorleitung (4) vorliegt, und dass bei späteren Messungen bei Überschreiten einer vorbestimmten oder vorbestimmbaren Größe des empfangenen Impulses relativ zu einer für dieselbe Sensorleitung (4) für denselben Parameter zuvor erstellten, um die vorbestimmte Größe versetzt dargestellten Referenzdarstellung die entsprechende Überschreitungstelle als Undichtigkeit definiert wird.

2. Verfahren nach Anspruch 1, wobei bei Rohrleitungen (R), die Innenrohr (1), Außenrohr (2) und einen mit Luft, Gas, Vakuum oder Füllmaterial (3) zur Wärmedämmung gefüllten Isolierraum zwischen dem Innenrohr (1) und der Innenwandung des das Innenrohr (1) mit Abstand umgebenden Außenrohres (2) aufweisen, die Sensorleitung (4) im Isolierraum angeordnet wird.

3. Verfahren nach Anspruch 1, wobei bei Behältern oder Räumen die Sensorleitung (4, 41) in einem Raum oder ein oder mehreren Auffangbehältern oder diesen oder diese durchdringend angeordnet wird.

4. Verfahren nach Anspruch 1, wobei für Referenzkurven und die späteren Laufzeitbilder Messungen der Parameter in Teilabschnitten des zu messenden Sensorleitungssystems durchgeführt werden.

5. Verfahren nach Anspruch 3 oder 4, wobei beim Vergleichen von Referenzkurven und späteren Laufzeitbildern Änderungen der Sensorik, der Meßergebnisse aufgrund Alterung oder dergleichen kompensiert werden.

6. Einrichtung zur Durchführung des Verfahrens nach einem der Ansprüche 1 bis 5 zur Detektion und Ortung von Undichtigkeiten in Räumen, Behältern und/oder Rohrleitungssystemen, denen mindestens eine isolierte oder isoliert angeordnete Sensorleitung (4) zugeordnet ist, mit einer Sensorleitung (4), einer Impulsquelle zur Sendung von Impulsen in die Sensorleitung (4) und einer Empfangseinrichtung für reflektierte Impulse, mit Ermittlung der Lage von ein oder mehreren Sprungstellen aus der Laufzeit und der Größe der an Sprungstellen, Undichtigkeiten oder dergleichen reflektierten oder teilreflektierten und wieder empfangenen Impulse, aus denen als Bezugskurve für spätere Messungen dienende Laufzeitdiagramme (L1) ermittelt und dargestellt werden, wobei aus der wiederholten Messung von reflektierten Impulsen derselben Sensorleitung für verschiedene Parameter ein Laufzeitbildarchiv vorhanden ist, und wobei der Sensorleitung (4) ein Sensor (5) für die Messung von einem physikalischen Parameter zugeordnet ist.

7. Einrichtung nach Anspruch 6, wobei ein System zur Übertragung der Meßwerte der verteilt angeordneten Sensoren (5) zur Überwachungsstelle vorgesehen ist.

8. Einrichtung nach Anspruch 6 oder 7, wobei die Statuskurven einerseits und die Scharen später ermittelter Laufzeitbilder andererseits in einem Rechner gespeichert sind und die später ermittelten Laufzeitbilder ganz oder für einzelne Teilabschnitte automatisch mit den Referenzkurven zugehöriger Parameter vergleichbar sind.

9. Einrichtung nach Anspruch 6, 7 oder 8, wobei die Parameter in unterschiedlichen Bereichen der Sensorleitung (4, 41) messbar sind.

10. Einrichtung nach Anspruch 6, wobei eine Sensorleitung mehrere getrennt voneinander angeordnete Behälter durchläuft.

11. Einrichtung nach einem der Ansprüche 6 bis 10, wobei Temperaturparameter in 20 °C-Schritten zugrundegelegt werden.

## Claims

1. A method of detecting and locating leakages in spaces, containers and/or pipeline systems with which there is associated at least one sensor line (4) that is insulated or arranged in insulating manner wherein, for the same sensor line (4), the temporal sequence of pulses received back after reflection of partial reflection following the transmission of a pulse are determined and stored and/or represented until an archive of transit time diagrams of as many parameters of the same sensor line (4) as possible is obtained, and that during subsequent measurements when a received pulse exceeds a predetermined or predeterminable magnitude relative to a previously prepared reference for the same sensor line (4) in respect of the same parameter and which is offset by the predetermined magnitude the corresponding point of exceeding is defined as a leakage.

2. A method in accordance with Claim 1, wherein, in the case of pipelines (R), which comprise an inner pipe (1), an outer pipe (2) and an insulating space that is located between the inner pipe (1) and the inner wall of the outer pipe (2) which itself is spaced from and surrounds the inner pipe (1) and in which said space is filled with air, gas, vacuum or a filler material (3) for thermal insulation purposes, the sensor line (4, 41) is arranged in the insulating space.

3. A method in accordance with Claim 1, wherein in the case of containers or spaces, the sensor line (4, 41) is arranged in a space or one or more collecting containers or penetrates therethrough.

4. A method in accordance with Claim 1, wherein for reference curves and the subsequent transit time diagrams, measurements of the parameters are undertaken in partial sections of the sensor line system to be measured.

5. A method in accordance with Claim 3 or 4, wherein during comparison of reference curves and subsequent transit time diagrams, changes in the sensing means, in the measurement results caused by ageing or the like are compensated.

6. An apparatus for carrying out the method according to any one of Claims 1 to 5 for the detection and location of leakages in spaces, containers and/or pipeline systems with which there is associated at least one sensor line (4) that is insulated or arranged in insulating manner, with a sensor line (4), a pulse course for transmitting pulses in the sensor line and a receiver device for reflected pulses, with determination of the location of one or more irregularities from the transit time and the magnitude of the pulses reflected or partially reflected at irregularities, leakages or the like and then received, from which pulses transit time diagrams (L1) are determined and presented as reference curves for subsequent measurements, a transit time archive being provided from the repeated measurement of reflected pulses of the same sensor line for differing parameters, and a sensor (5) for the measurement of a physical parameter being associated with the sensor line (4).

7. A device in accordance with Claim 6, wherein there is provided a system for transmitting the test values from the distributed sensors (5) to the monitoring station.

8. A device in accordance with Claim 6 or 7, wherein the status curves on the one hand, and the family of subsequently established transit time diagrams on the other, are stored in a computer and the subsequently established transit time diagrams are automatically compared as a whole or in respect of individual sections thereof with the parameters appertaining to the reference curves.

9. A device in accordance with Claim 6, 7 or 8, wherein the parameters are measured at differing regions of the sensor line (4, 41).

10. A device in accordance with Claim 6, wherein a sensor line extends through a plurality of mutually separate containers.

11. A device in accordance with any one of the Claims 6 to 10, wherein the temperature parameters are based on 20°C steps.

## Revendications

1. Procédé de détection des points de fuite dans des locaux, des containers, des systèmes de conduites, dans lequel au moins un circuit de capteur (4) isolé ou disposé de manière isolée est prévu, pour lequel la période suivant une impulsion transmise, jusqu'à l'impulsion à nouveau reçue, réfléchie ou partiellement réfléchie pour ce même circuit de capteur (4), est établie et enregistrée et/ou représentée comme images de la durée de propagation pour plusieurs paramètres jusqu'à obtention d'un fichier d'images de durée de propagation de plusieurs paramètres possibles de ce circuit de capteur (4) et dans lequel lors de mesures ultérieures, on inscrit le dépassement d'une grandeur prédéterminée ou prédéterminable de l'impulsion reçue relativement à une impulsion pour le même circuit de capteur (4) pour le même paramètre, autour de la grandeur prédéterminée de la représentation de référence, le site de dépassement correspondant étant défini comme fuite.

2. Procédé suivant la revendication 1, où les conduites (R) présentent le tube interne (1), le tube externe (2) et un espace isolé rempli d'air, de gaz, de vide ou d'un matériau de remplissage (3) pour l'isolation thermique, entre le tube interne (1) et la paroi interne du tube externe (2) entourant le tube interne (1) à une certaine distance, la conduite de capteur (4) étant disposée dans l'espace isolé.

3. Procédé suivant la revendication 1, où pour le conteneur ou l'espace, la conduite de capteur (4, 41) est disposée dans un espace ou un ou plusieurs récipients de réception ou de manière à traverser celui-ci ou ceux-ci.

4. Procédé suivant la revendication 1, où pour la courbe de référence et les images de durée de propagation, les mesures des paramètres sont réalisées sur des tronçons du système de conduite de capteur à mesurer.

5. Procédé suivant la revendication 3 ou 4, où lors de la comparaison des courbes de référence et des images ultérieures de durée de propagation, les résultats de mesure sur base du vieillissement ou similaire sont compensés par des variations du capteur.

6. Dispositif pour réaliser le procédé suivant l'une quelconque des revendications 1 à 5, pour la détection de sites de fuites dans des locaux, des containers, des systèmes de conduites, dont au moins une conduite de capteur (4) isolé ou disposé de manière isolée est prévue, avec une conduite de capteur (4), une source d'impulsion pour envoyer des impulsions dans la conduite de capteur (4) et un dispositif de réception pour l'impulsion réfléchie, avec détermination du site d'un ou de plusieurs endroits de saut sur la durée de propagation et de la taille de l'impulsion reçue réfléchie ou partiellement réfléchie aux endroits de saut, aux fuites ou similaire, à partir desquels on détermine un diagramme de durée de propagation (L1) servant de courbe de référence pour des mesures ultérieures, où à partir des mesures récurrentes des impulsions réfléchies de la même conduite de capteur pour différents paramètres, un fichier d'images de durée de propagation est obtenu et où la conduite de capteur (4) est équipée d'un capteur (5) pour la mesure d'un paramètre physique.

7. Dispositif suivant la revendication 6, où un système pour transférer la valeur mesurée des capteurs (5) répartis est prévu pour les sites de surveillance.

8. Dispositif suivant la revendication 6 ou 7, où les courbes de statut d'une part, et l'assemblage des images de durée de propagation déterminées ultérieurement d'autre part, sont enregistrés dans un ordinateur et les images de durée de propagation déterminées ultérieurement sont comparables, entièrement ou pour des tronçons particuliers, automatiquement à la courbe de référence du paramètre en question.

9. Dispositif suivant la revendications 6, 7 ou 8, où les paramètres peuvent être mesurés dans différentes zones de la conduite de capteur (4, 41).

10. Dispositif suivant la revendication 6, où une conduite de capteur traverse plusieurs conteneurs séparés.

11. Dispositif suivant l'une quelconque des revendications 6 à 10, où les paramètres température sont adoptés par étape de 20°C.
